(19) Europäisches Patentamt / European Patent Office / Office européen des brevets

(11) **EP 3 975 294 A1**

(12) **EUROPEAN PATENT APPLICATION**
published in accordance with Art. 153(4) EPC

(43) Date of publication:
**30.03.2022 Bulletin 2022/13**

(21) Application number: **20887881.9**

(22) Date of filing: **01.10.2020**

(51) International Patent Classification (IPC):
*H01M 4/525* (2010.01)     *C01G 53/00* (2006.01)
*H01M 4/36* (2006.01)      *H01M 4/505* (2010.01)
*H01M 10/052* (2010.01)    *H01M 10/0562* (2010.01)

(52) Cooperative Patent Classification (CPC):
**C01G 53/00; H01M 4/36; H01M 4/505;**
**H01M 4/525; H01M 10/052; H01M 10/0562;**
**Y02E 60/10**

(86) International application number:
**PCT/JP2020/037480**

(87) International publication number:
**WO 2021/095394 (20.05.2021 Gazette 2021/20)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **12.11.2019 JP 2019204937**

(71) Applicant: **JX Nippon Mining & Metals Corporation**
**Tokyo 105-8417 (JP)**

(72) Inventor: **KASHIMURA,Toshihide**
**Kitaibaraki-shi, Ibaraki 319-1535 (JP)**

(74) Representative: **Yeadon IP Limited**
**Nexus**
**Discovery Way**
**Leeds LS2 3AA (GB)**

(54) **POSITIVE ELECTRODE ACTIVE MATERIAL FOR ALL-SOLID-STATE LITHIUM ION BATTERIES, POSITIVE ELECTRODE FOR ALL-SOLID-STATE LITHIUM ION BATTERIES, ALL-SOLID-STATE LITHIUM ION BATTERY, AND METHOD FOR PRODUCING POSITIVE ELECTRODE ACTIVE MATERIAL FOR ALL-SOLID-STATE LITHIUM ION BATTERIES**

(57)     Provided is a positive electrode active material for all-solid-state lithium ion batteries, which improves an electrode density of a positive electrode to provide improved volume energy density and output characteristics, when used in an all-solid-state lithium ion battery. The positive electrode active material for all-solid-state lithium ion batteries has a compositional formula represented by: $Li_aNi_bCo_cMn_dAl_eO_2$ with $1.00 \leq a \leq 1.02$; $0.8 \leq b \leq 0.9$; $0 < c \leq 0.2$; $0 < d \leq 0.2$; $b + c + d = 1$; and $0.02 \leq e \leq 0.15$. The positive electrode active material has a ratio $C_s/C_c$ of from 2 to 10 in which $C_c$ is a concentration of Al at a central portion of a particle, and $C_s$ is a concentration of Al at a position of a depth of 10 nm from a surface of the particle in a cross section of the particle. The positive electrode active material has a porosity in the particle of less than 30%. The positive electrode active material comprises a mixture of a positive electrode active material (1) having an average particle size (D50) of from 6 to 15 $\mu$m and a positive electrode active material (2) having an average particle size (D50) of from 1 to 5 $\mu$m.

EP 3 975 294 A1

**Description**

FIELD OF THE INVENTION

The present invention relates to a positive electrode active material for all-solid-state lithium ion batteries, a positive electrode for all-solid-state lithium ion batteries, an all-solid-state lithium ion battery, and a method for producing a positive-electrode active material for all-solid-state lithium ion batteries.

BACKGROUND OF THE INVENTION

With rapidly spreading of information relational devices and communication devices such as personal computers, video cameras, and mobile phones in recent years, development of batteries used as their power sources has been emphasized. Among the batteries, lithium batteries are attracting attention in terms of high energy density. Further, the high energy density and improvement of battery characteristics are also required for lithium secondary batteries in large-scale applications such as on-board power sources and road leveling.

However, for the lithium ion batteries, most of the electrolytes are organic compounds, and even if a flame-retardant compound is used, any risk of causing a fire could not be completely eliminated. As alternative candidates for such liquidtype lithium ion batteries, all-solid lithium ion batteries having a solid electrolyte have been attracting attention in recent years.

Also, as the positive electrode active material for non-aqueous electrolyte secondary batteries, lithium cobalt composite oxides represented by lithium cobaltate ($LiCoO_2$) as well as lithium nickel composite oxides represented by lithium nickelate ($LiNiO_2$), and lithium manganese composite oxides represented by lithium manganate ($LiMnO_2$) are widely used.

By the way, lithium cobaltate has problems that it is expensive because a reserve of cobalt is less, and it contains cobalt as a main component, which has unstable supply and larger price changes. Therefore, a lithium nickel composite oxide or a lithium manganese composite oxide containing relatively inexpensive nickel or manganese as a main component has attracted attention in terms of cost. However, although lithium manganate has better thermal stability than that of lithium cobalt oxide, it has a charge/discharge capacity much lower than that of other materials, and also has very short charge/discharge cycle characteristics which indicate its life. Therefore, the lithium manganate has many practical problems as a battery. On the other hand, lithium titanate exhibits a larger charge/discharge capacity than that of lithium cobaltate, and is thus expected as a positive electrode active material capable of producing a battery having a higher energy density with lower costs.

Although all-solid-state batteries that do not use a non-aqueous electrolyte, which may have a risk of ignition, leakage or explosion, improve safety, they may reduce battery performance due to formation of a high resistance layer at an interface between the solid electrolyte and the positive electrode active material in the positive electrode layer.

To address such problems, for example, a technique of coating the surface of the positive electrode active material is known to suppress the formation of the high resistance layer at the interface between the positive electrode active material for all-solid-state lithium ion batteries and the sulfide solid electrolyte.

As a technique for coating the surface of the positive electrode active material, Patent Literature 1 describes positive electrode active material particles having a higher Al concentration on an outer side of the particles that on an inner side of the particles. According to this configuration, the formation of the high resistance layer at the interface between the positive electrode active material for the all-solid-state lithium ion batteries and the sulfide solid electrolyte can be suppressed, so that the internal impedance of the all-solid-state lithium ion battery can be reduced.

CITATION LIST

Patent Literatures

[Patent Literature 1] Japanese Patent No. 5395258 B

SUMMARY OF THE INVENTION

Technical Problem

However, as described in Patent Literature 1, simply increasing of the concentration of Al on the outer side the particles rather than the inner side of the particles in the positive electrode active material particles does not provide sufficient electrode density for all-solid-state lithium ion batteries, so that a volume energy density cannot be sufficiently obtained.

Further, Patent Literature 1 discloses that an Al surface segregation layer (self-forming buffer layer) is formed for a primary particle type LCO (lithium cobalt composite oxide). However, it does not disclose a secondary particle type NCM (lithium nickel cobalt manganese composite oxide). For the NCM, the addition of Al at a precursor preparation stage as in Examples described in Patent Literature 1 results in a uniform presence of Al in the particles, but it does not lead to the formation of the surface segregation layer. Further, although it is advantageous to use High-Ni composition NCM in order to obtain a higher volume energy density, there is no example where the High-Ni composition NCM is used in the technique described in Patent Literature 1. Although Patent Literature 1 has an example of NCA (lithium nickel cobalt aluminum composite oxide), the Al surface segregation layer is not disclosed.

Therefore, an object of an embodiment of the present invention is to provide a positive electrode active material for all-solid-state lithium ion batteries, which improves an electrode density of a positive electrode to provide improved volume energy density and output characteristics, when used in an all-solid-state lithium ion battery.

Solution to Problem

In an aspect, the present invention relates to a positive electrode active material for all-solid-state lithium ion batteries, wherein the positive electrode active material has a compositional formula represented by: $Li_aNi_bCo_cMn_dAl_eO_2$ with $1.00 \leq a \leq 1.02$; $0.8 \leq b \leq 0.9$; $0 < c \leq 0.2$; $0 < d \leq 0.2$; $b + c + d = 1$; and $0.02 \leq e \leq 0.15$; wherein the positive electrode active material has a ratio $C_s/C_c$ of from 2 to 10 in which $C_c$ is a concentration of Al at a central portion of a particle, and $C_s$ is a concentration of Al at a position of a depth of 10 nm from a surface of the particle in a cross section of the particle; wherein the positive electrode active material has a porosity in the particle of less than 30%; and wherein the positive electrode active material comprises a mixture of a positive electrode active material (1) having an average particle size (D50) of from 6 to 15 $\mu$m and a positive electrode active material (2) having an average particle size (D50) of from 1 to 5 $\mu$m.

The positive electrode active material for all-solid-state lithium ion batteries according to an embodiment of the present invention has a mass ratio of the positive electrode active material (1): the positive electrode active material (2) is from 5:5 to 2:8.

The positive electrode active material for all-solid-state lithium ion batteries according to another embodiment of the present invention has a ratio of the average particle size (D50) of the positive electrode active material (1) to the average particle size (D50) of the positive electrode active material (2) of from 2 to 6.

In another aspect, the present invention relates to a positive electrode for all-solid-state lithium ion batteries, wherein the positive electrode comprises the positive electrode active material for all-solid-state lithium ion batteries according to the present invention.

In yet another aspect, the present invention relates to an all-solid-state lithium ion battery, wherein the all-solid-state lithium ion battery comprises the positive electrode for all-solid-state lithium ion batteries according to the present invention.

In still another aspect, the present invention relates to a method for producing the positive electrode active material for all-solid-state lithium ion batteries according to the present invention, wherein the method comprises the steps of: dispersing $Al_2O_3$ in pure water to prepare an additive slurry; adding the additive slurry to a medium comprising nickel cobalt manganese hydroxide in pure water, stirring and dispersing the resulting mixture to provide a surface-treated slurry; drying the surface-treated slurry to provide a surface-treated precursor; and adding a lithium source to the surface-treated precursor and firing the resulting mixture at a temperature of from 650 to 800 °C.

In the method for producing the positive electrode active material for all-solid-state lithium ion batteries according to an embodiment of the present invention, an average particle size D50 of $Al_2O_3$ as a powder is from 0.05 to 0.7 $\mu$m on a volume basis.

Advantageous Effects of Invention

According to the embodiment of the present invention, it is possible to provide a positive electrode active material for all-solid-state lithium ion batteries, which improves an electrode density of a positive electrode to provide improved volume energy density and output characteristics, when used in an all-solid-state lithium ion battery.

DETAILED DESCRIPTION OF THE INVENTION

(Composition of Positive Electrode Active Material for All-Solid-State Lithium Ion Batteries)

A positive electrode active material for all-solid-state lithium ion batteries according to an embodiment of the present invention has a compositional formula represented by: $Li_aNi_bCo_cMn_dAl_eO_2$ with $1.00 \leq a \leq 1.02$; $0.8 \leq b \leq 0.9$; $0 < c \leq 0.2$; $0 < d \leq 0.2$; $b + c + d = 1$; and $0.02 \leq e \leq 0.15$.

In the positive electrode active material for all-solid-state lithium ion batteries according to the embodiment of the present invention, if the composition of Li is less than 1.00, an amount of lithium is insufficient and it is difficult to maintain a stable crystal structure. If the composition of Li is more than 1.02, a discharge capacity of an all-solid-state lithium ion battery produced using the positive electrode active material may be decreased.

The positive electrode active material for all-solid-state lithium ion batteries according to the embodiment of the present invention has a ratio $C_S/C_C$ of from 2 to 10 in which $C_C$ is a concentration of Al at a central portion of a particle, and $C_S$ is a concentration of Al at a position of a depth of 10 nm from a surface of the particle in a cross section of the particle. In the positive electrode active material for all-solid-state lithium ion batteries according to the embodiment of the present invention, the concentration $C_S$ of Al at the position of the depth of 10 nm from the surface of the particle is higher than the concentration $C_C$ of Al at the central portion of the particle in the cross section of the particle. As will be described later, this is because $Al_2O_3$ is surface-treated after preparation of a NCM precursor, and then fired together with a lithium source to form an Al surface segregation layer (self-forming buffer layer) in a secondary particle type NCM.

The positive electrode active material for all-solid-state lithium ion batteries according to the embodiment of the present invention has the ratio $C_S/C_C$ of 2 or more in which $C_C$ is the concentration of Al at the central portion of the particle, and $C_S$ is the concentration of Al at the position of the depth of 10 nm from the surface of the particle in the cross section of the particle, whereby it is possible to satisfactorily suppress formation of a high resistance layer at an interface between the positive electrode active material for all-solid-state lithium ion batteries and a sulfide-based solid electrolyte. Further, the ratio $C_S/C_C$ is 10 or less, whereby a resistance value of the positive electrode active material itself can be suppressed. The ratio $C_S/C_C$ may be controlled to 2.5 or more, or 3.0 or more, or 3.5 or more. Further, the ratio $C_S/C_C$ may be controlled to 9 or less, 8 or less, 7 or less, or 6 or less.

The positive electrode active material for all-solid-state lithium ion batteries according to the embodiment of the present invention has a porosity in the particle of less than 30%. According to such a configuration, when the positive electrode active material is used for a positive electrode for all-solid-state lithium ion batteries, an amount of the positive electrode active material filled is improved, so that the electrode density can be improved. The positive electrode active material for all-solid-state lithium ion batteries according to the embodiment of the present invention may be controlled to have a porosity in the particle of less than 25% or less than 20%.

The positive electrode active material for all-solid-state lithium ion batteries according to the embodiment of the present invention comprises a mixture of a positive electrode active material (1) having an average particle size (D50) of from 6 to 15 $\mu$m and a positive electrode active material (2) having an average particle size (D50) of from 1 to 5 $\mu$m. According to such a configuration, the mixing of the particles having a lower average particle size (D50) and the particles having a higher average particle size (D50) can decrease interparticle voids, so that the amount of the positive electrode active material filled can be improved.

As described above, the positive electrode active material for all-solid-state lithium ion batteries according to the embodiment of the present invention has the lower porosity in the particle, the High-Ni composition NCM having the Al surface segregation layer, and the mixture of the particles having the lower average particle size (D50) and the particles having the higher average particle size (D50). Therefore, it can provide an all-solid-state battery having improved volume energy density and output characteristics.

The positive electrode active material for all-solid-state lithium ion batteries according to the embodiment of the present invention preferably has a mass ratio of the positive electrode active material (1): the positive electrode active material (2) of from 5:5 to 2:8. Since the mass ratio of the positive electrode active material (1): positive electrode active material (2) is 5:5 or more, a percentage of the positive electrode active material (2) having a lower particle size in the positive electrode active materials will be 50% or more, which can ensure a minimum required contact area of the positive electrode active material with the solid electrolyte. Further, since the mass ratio of the positive electrode active material (1): positive electrode active material (2) is 2:8 or less, it is possible to prevent a decrease in electrode density due to an increase in the positive electrode active material (2) having the lower particle size. More preferably, the positive electrode active material for all-solid-state lithium ion batteries according to the embodiment of the present invention has a mass ratio of the positive electrode active material (1): positive electrode active material (2) of from 4:6 to 3:7.

The positive electrode active material for all-solid-state lithium ion batteries according to the embodiment of the present invention preferably has a ratio of the average particle size (D50) of the positive electrode active material (1) to the average particle size (D50) of the positive electrode active material (2) of from 2 to 6. Since the ratio of the average particle size (D50) of the positive electrode active material (1) to the average particle size (D50) of the positive electrode active material (2) is 2 or more, the voids between the positive electrode active materials are easily filled and the electrode density is improved. Since the ratio of the average particle size (D50) of the positive electrode active material (1) to the average particle size (D50) of the positive electrode active material (2) is 6 or less, the proportion of the positive electrode active material having lower particle size (2) required to fill the voids between the positive electrode active materials can be reduced, thereby preventing the electrode density from being decreased. More preferably, the positive electrode active material for all-solid-state lithium ion batteries according to the embodiment of the present invention has a ratio of the average particle size (D50) of the positive electrode active material (1) to the average particle size (D50) of the positive electrode active material (2) of from 3 to 5.

(Method for Producing Positive Electrode Active Material for All-Solid-State Lithium ion Batteries)

Next, a method for producing the positive electrode active material for all-solid-state lithium ion battery according to an embodiment of the present invention will be described in detail. First, $Al_2O_3$ is dispersed in pure water so as to be 10 to 204 g/L to prepare an additive slurry.

In the preparation of the additive slurry, an average particle size D50 of $Al_2O_3$ as a powder is preferably from 0.05 to 0.7 $\mu$m on a volume basis. The average particle size D50 of $Al_2O_3$ as a powder of 0.05 $\mu$m or more on a volume basis can suppress generation of aggregation when dispersed in pure water. The average particle size D50 of $Al_2O_3$ as a powder of 0.7 $\mu$m or less on a volume basis can allow for a uniform treatment on a precursor surface. The average particle size D50 of $Al_2O_3$ as a powder on a volume basis is preferably from 0.1 to 0.7 $\mu$m, and more preferably from 0.1 to 0.5 $\mu$m, and even more preferably from 0.1 to 0.3 $\mu$m.

The additive slurry is then added to a medium containing a nickel cobalt manganese hydroxide having a compositional formula represented by $Ni_bCo_cMn_d(OH)_2$ with $0.8 \leq b \leq 0.9$; $0 < c \leq 0.2$; $0 < d \leq 0.2$; and $b + c + d = 1$, and stirred and dispersed to treat a surface of the nickel cobalt manganese hydroxide. A surface-treated slurry is thus prepared.

The surface treatment as described above is carried out with the additive slurry in which $Al_2O_3$ is dispersed in pure water, such that Al / (Ni + Mn + Co) is from 2 to 15 mol% in the surface-treated slurry.

The surface-treated slurry described above is then dried to obtain a surface-treated precursor. To the surface-treated precursor is then added a lithium source such as lithium hydroxide and fired at a temperature of 650 to 800 °C. The firing atmosphere is preferably an oxygen atmosphere.

The positive electrode active material (1) having an average particle size (D50) of from 6 to 15 $\mu$m and the positive electrode active material (2) having an average particle size (D50) of from 1 to 5 $\mu$m can be prepared by controlling average particle sizes (D50) of the precursors to 6 to 15 $\mu$m and 1 to 5 $\mu$m, respectively. These materials can be then mixed to produce the positive electrode active material for all-solid-state lithium ion batteries according to the embodiment of the present invention.

For example, the preparation of the precursor may be carried out by providing an aqueous transition metal solution in which nickel sulfate, cobalt sulfate, and manganese sulfate are dissolved, an aqueous caustic soda solution, and an aqueous ammonia solution, and introducing these solutions into one reaction vessel or reaction tank in a reaction device to prepare a slurry containing nickel cobalt manganese hydroxide (precursor) particles. In this case, the reaction may be carried out while circulating it between the reaction vessel and a cross-flow filtration device.

At this time, the precursor preparation conditions are adjusted to prepare two types of precursors having average particle sizes (D50) of from 6 to 15 $\mu$m and from 1 to 5 $\mu$m, respectively. The particle sizes of the precursors will be substantially the particle size of the positive electrode active material after firing. The method for obtaining these precursor powders is not particularly limited, and it can be achieved by selecting production conditions suitable for those described above from known crystallization methods.

As described above, the nickel cobalt manganese hydroxide can be surface-treated with $Al_2O_3$ and then fired together with the lithium source to form an Al surface segregation layer (self-forming buffer layer) in the secondary particle type nickel cobalt manganese composite oxide.

Here, the positive electrode active material for all-solid-state lithium ion batteries according to the embodiment of the present invention has a ratio $C_s/C_c$ of from 2 to 10 in which $C_s$ is a concentration of Al at a central portion of a particle, and $C_c$ is a concentration of Al at a position of a depth of 10 nm from a surface of the particle in a cross section of the particle, and a porosity in the particle of less than 30%, and is formed of a mixture of a positive electrode active material (1) having an average particle size (D50) of from 6 to 15 $\mu$m and a positive electrode active material (2) having an average particle size (D50) of from 1 to 5 $\mu$m.

The controlling of the ratio $C_s/C_c$ of from 2 to 10 can be carried out by adjusting a firing temperature of the positive electrode active material and an amount of Al added.

Further, the controlling of the porosity in the particle to less than 30% can be carried out by adjusting the precursor preparation conditions, for example, a pH during reaction, an amount of ammonia added, and a reaction time.

(All-Solid-State Lithium ion Battery Provided with Positive Electrode Active Material for All-Solid-State Lithium ion Batteries)

The positive electrode active material for all-solid-state lithium ion batteries according to the embodiment of the present invention can be used to form a positive electrode layer (a positive electrode for all-solid-state lithium ion batteries), thereby producing an all-solid-state lithium ion battery having a solid electrolyte layer, the positive electrode layer, and a negative electrode layer.

EXAMPLES

Hereinafter, Examples are provided for better understanding of the present invention and its advantages, but the present invention is not limited to these Examples.

(Example 1)

<Preparation of Positive Electrode Active Material Having Large Particles (Higher Particle Size)>

$Al_2O_3$ was dispersed in pure water so as to have 102 g/L to prepare an additive slurry. In the preparation of the additive slurry, the average particle size D50 of $Al_2O_3$ as a powder was 0.3 $\mu$m on a volume basis.
The additive slurry as described above was then added to a medium obtained by introducing nickel cobalt manganese hydroxide represented by the compositional formula: $Ni_{82}Co_{15}Mn_3(OH)_2$ having an average particle size (D50) of about 10 $\mu$m into pure water, and stirred and dispersed to treat a surface of the nickel cobalt manganese hydroxide. A surface-treated slurry was thus prepared. The surface treatment as described above was carried out with the additive slurry in which $Al_2O_3$ was dispersed in pure water, such that the ratio Al / (Ni + Mn + Co) was 5 mol% in the surface-treated slurry.
The surface-treated slurry as described above was then dried to obtain a surface-treated precursor. Lithium hydroxide was then added to the surface-treated precursor and fired in an oxygen atmosphere at 740 °C for 12 hours to obtain a positive electrode active material (1).

<Preparation of Positive Electrode Active Material Having Small Particles (Lower Particle Size)>

The additive slurry as described above was added to a medium obtained by introducing nickel cobalt manganese hydroxide represented by the compositional formula: $Ni_{82}Co_{15}Mn_3(OH)_2$ having an average particle size (D50) of about 3 $\mu$m into pure water, and stirred and dispersed to treat a surface of the nickel cobalt manganese hydroxide. A surface-treated slurry was thus prepared. The surface treatment as described above was carried out with the additive slurry in which $Al_2O_3$ was dispersed in pure water, such that the ratio Al / (Ni + Mn + Co) was 5 mol% in the surface-treated slurry. The surface-treated slurry as described above was then dried to obtain a surface-treated precursor.
Lithium hydroxide was then added to the surface-treated precursor and fired in an oxygen atmosphere at 720 °C for 12 hours to obtain a positive electrode active material (2).
The positive electrode active material (1) and the positive electrode active material (2) thus prepared were mixed so as to have the mass ratio shown in Table 2 to obtain the positive electrode active material according to Example 1.

(Example 2)

A positive electrode active material was prepared by the same method as that of Example 1, with the exception that for the surface-treated slurry, the surface treatment was carried out with an additive slurry in which $Al_2O_3$ was dispersed in pure water such that the ratio Al / (Ni + Mn + Co) was 2 mol%.

(Example 3)

A positive electrode active material was prepared by the same method as that of Example 1, with the exception that for the surface-treated slurry, the surface treatment was carried out with an additive slurry in which $Al_2O_3$ was dispersed in pure water such that the ratio Al / (Ni + Mn + Co) was 15 mol%.

(Examples 4 and 5)

Each positive electrode active material was prepared by the same method as that of Example 1, with the exception that the precursors having average particle sizes (D50) of about 13 $\mu$m and about 6 $\mu$m was used for the positive electrode active materials (1), and the positive electrode active materials (1) and (2) were mixed such that each mixed weight ratio was the mass ratio shown in Table 2.

(Example 6)

A positive electrode active material was prepared by the same method as that of Example 1, with the exception that the precursor having an average particle size (D50) of about 5 $\mu$m was used for the positive electrode active material (2), and a particle size ratio of the positive electrode active materials (1) and (2) was the value shown in Table 2.

(Example 7)

A positive electrode active material was prepared by the same method as that of Example 1, with the exception that the precursors having average particle sizes (D50) of about 6 μm and about 1 μm were used for the positive electrode active materials (1) and (2), respectively, and a particle size ratio of the positive electrode active materials (1) and (2) was the value shown in Table 2.

(Example 8)

A positive electrode active material was prepared by the same method as that of Example 1, with the exception that the firing temperature of the positive electrode active material having large particles (1) and the firing temperature of the positive electrode active material having small particles (2) were the temperatures shown in Table 1.

(Example 9)

A positive electrode active material was prepared by the same method as that of Example 1, with the exception that the amount of lithium hydroxide added to the surface-treated precursor was decreased.

(Example 10)

A positive electrode active material was prepared by the same method as that of Example 1, with the exception that nickel cobalt manganese hydroxide represented by the compositional formula: $Ni_{90}Co_7Mn_3(OH)_2$ was used, and the firing temperature of the positive electrode active material having large particles (1) and the firing temperature of the positive electrode active material having small particles (2) were the temperatures shown in Table 1.

(Comparative Example 1)

A positive electrode active material was prepared by the same method as that of Example 1, with the exception that the firing temperature of the positive electrode active material having large particles (1) and the firing temperature of the positive electrode active material having small particles (2) were the temperatures shown in Table 1.

(Comparative Example 2)

A positive electrode active material was prepared by the same method as that of Example 1, with the exception that the precursors having average particle sizes (D50) of about 18 μm and about 8 μm were used for the positive electrode active materials (1) and (2), respectively, and a particle size ratio of the positive electrode active materials (1) and (2) was the value shown in Table 2.

(Comparative Example 3)

A positive electrode active material was prepared by the same method as that of Example 1, with the exception that the precursors having average particle sizes (D50) of about 5 μm and about 3 μm were used for the positive electrode active materials (1) and (2), respectively, and a particle size ratio and a mixed weight ratio of the positive electrode active materials (1) and (2) were the values shown in Table 2.

(Comparative Example 4)

A positive electrode active material was prepared by the same method as that of Example 1, with the exception that the precursors each having a porosity in the particle of about 30% were used for the positive electrode active materials (1) and (2), respectively.
It should be noted that the porosity in the particle of the precursor can be increased by adjusting precursor preparation conditions, for example, increasing a pH during reaction, decreasing an amount of ammonia added, and shortening a reaction time.

(Comparative Example 5)

A positive electrode active material was prepared by the same method as that of Example 1, with the exception that the positive electrode active material (1) and the positive electrode active material (2) were mixed so as to have the mass ratio shown in Table 2.

(Comparative Example 6)

A positive electrode active material was prepared by the same method as that of Example 1, with the exception that no surface treatment with Al was carried out for the nickel cobalt manganese hydroxide.

- Composition -

The contents of Li, Ni, Co, Mn, and Al in the positive electrode active material were measured by an inductively coupled plasma-atomic emission spectrophotometer (ICP-OES) and an ion chromatography method. From the analysis results, a, b, c, d, and e were determined when the positive electrode active material was represented by the metal composition: $Li_aNi_bCo_cMn_dAl_e$.

- Al concentration $C_c$, $C_s$ -

In the particle cross section of the positive electrode active material, the concentration $C_c$ of Al at the central portion of the particle and the concentration $C_s$ of Al at the position of the depth of 10 nm from the particle surface were measured as follows:
First, a linear analysis of the particle cross section was conducted with a STEM-EDX analyzer. The concentration of Al (atm%) was calculated from the analysis results. For a difference between the concentrations of Al at the diameter central portion (arbitrary one point on an inner side from the particle surface by 100 nm or more) and at the position of the depth of 10 nm from the particle surface, the ratio: (the concentration of Al at the position of the depth of 10 nm from the particle surface) / (the concentration of Al at the diameter central portion) was calculated.

- Average Particle Size D50 -

The average particle size D50 of each positive electrode active material was measured by Microtrac MT 3300 EXII.

- Porosity in Particle -

After embedding each positive electrode active material in a resin, the particles of the positive electrode active material were cut by argon sputtering using a cross section polisher (CP) to expose the particle cross section. The exposed particle cross section was observed using a scanning electron microscope, and the image of the observed particle cross section was analyzed by image analysis software with void parts of the image as black and dense parts as white. Arbitrary 20 or more particle cross sections were subjected to calculation of an area of the black part / (black part + white part) to obtain a porosity.

- Battery Characteristics -

Hereinafter, each all-solid-state battery cell was produced in a glove box in an argon atmosphere. A total of about 3 g of the positive electrode active material obtained in each of Examples 1 to 10 and Comparative Examples 1 to 6, a sulfide solid electrolyte material $Li_3PS_4$, and acetylene black was weighted so as to have a mass ratio of 72:25:3, and they were mixed in a mortar to prepare a mixture.
An appropriate amount of electrolyte was placed into a jig and pressed, and an appropriate amount of the above mixture was further placed in the jig and pressed.
After pressing, an upper part was fixed and inverted, and a lower punch of the jig was removed.
A Li-In foil of a negative electrode was then placed in the jig, and the lower part was fixed, and finally fixed with a pressure screw to tighten a sealing cap nut to produce a cell.
Using the cell, battery characteristics (discharge capacity 1, discharge capacity 2, output characteristics) at 25 °C were measured. The charge/discharge conditions are shown below:

Discharge Capacity 1 Charge: 3.7V, 0.1C CCCV; Discharge: 0.05C, 2.5V termination;
Discharge Capacity 2 Charge: 3.7V, 0.1C CCCV; Discharge: 1C, 2.5V termination; The output characteristic was a ratio (maintenance ratio) of the discharge capacity 2 to the discharge capacity 1.

- Electrode Density (Pellet Density) -

About 2 g of the positive electrode mixture prepared above was placed in a SUS pellet producing jig having φ10 mm and pressed at a pressure of 330 MPa to prepare an electrode pellet. The weight, diameter, and thickness of the prepared pellet were measured, and the electrode density was calculated.

The volume energy density of the electrode was calculated using the above discharge capacity 1 and electrode density, as follows:

$$\text{Volume energy density} = \text{discharge capacity 1} \times \text{average voltage during discharge} \times$$

$$\text{electrode density} \times 0.72 \text{ (ratio of electrode active material)}.$$

Tables 1 and 2 show the test conditions and evaluation results according to Examples 1 to 10 and Comparative Examples 1 to 6.

[Table 1]

| | Composition of Positive Electrode Active Material: $Li_aNi_bCo_cMn_dAl_eO_2$ | | | | | Firing Temperature | | Particle Size (D50) | |
|---|---|---|---|---|---|---|---|---|---|
| | Li | Ni/ (Ni+Co+Mn) | Co/ (Ni+Co+Mn) | Mn/ (Ni+Co+Mn) | Al/ (Ni+Co+Mn) | Large Particles | Small Particles | Large Particles | Small Particles |
| | (a) | (b) | (c) | (d) | (e) | ℃ | ℃ | μm | μm |
| Example 1 | 1.02 | 0.82 | 0.15 | 0.03 | 0.05 | 740 | 720 | 10.3 | 2.8 |
| Example 2 | 1.02 | 0.82 | 0.15 | 0.03 | 0.02 | 740 | 720 | 10.1 | 3.2 |
| Example 3 | 1.02 | 0.82 | 0.15 | 0.03 | 0.15 | 740 | 720 | 10.4 | 3.3 |
| Example 4 | 1.02 | 0.82 | 0.15 | 0.03 | 0.05 | 740 | 720 | 13.3 | 2.8 |
| Example 5 | 1.02 | 0.82 | 0.15 | 0.03 | 0.05 | 740 | 720 | 6.4 | 2.8 |
| Example 6 | 1.02 | 0.82 | 0.15 | 0.03 | 0.05 | 740 | 720 | 10.3 | 4.6 |
| Example 7 | 1.02 | 0.82 | 0.15 | 0.03 | 0.05 | 740 | 720 | 6.4 | 1.2 |
| Example 8 | 1.02 | 0.82 | 0.15 | 0.03 | 0.05 | 780 | 760 | 10.5 | 2.9 |
| Example 9 | 1.00 | 0.82 | 0.15 | 0.03 | 0.05 | 740 | 720 | 10.5 | 3.5 |
| Example 10 | 1.02 | 0.90 | 0.07 | 0.03 | 0.05 | 720 | 700 | 10.1 | 2.7 |
| | | | | | | | | | |
| Comp. 1 | 1.02 | 0.82 | 0.15 | 0.03 | 0.05 | 840 | 820 | 10.4 | 3.3 |
| Comp. 2 | 1.02 | 0.82 | 0.15 | 0.03 | 0.05 | 740 | 720 | 18.5 | 8.1 |
| Comp. 3 | 1.02 | 0.82 | 0.15 | 0.03 | 0.05 | 740 | 720 | 5.1 | 3.3 |
| Comp. 4 | 1.02 | 0.82 | 0.15 | 0.03 | 0.05 | 740 | 720 | 10.4 | 3.2 |
| Comp. 5 | 1.02 | 0.82 | 0.15 | 0.03 | 0.05 | 740 | 720 | 10.3 | 2.8 |
| Comp. 6 | 1.02 | 0.82 | 0.15 | 0.03 | 0 | 740 | 720 | 10.3 | 2.8 |

[Table 2]

| | Particle Size Ratio | Mixed Mass Ratio | Porosity in Particle | | Al Concentration Gradient: Cs/Cc | | Electrode Density (Pellet Density) | Discharge Capacity 1 | Discharge Capacity 2 | Volume Energy Density (Electrode) | Output Characteristics |
|---|---|---|---|---|---|---|---|---|---|---|---|
| | | | | | Large Particles | Small Particles | | | | | |
| | Large/ Small Particles | Large Particles: Small Particles | Large Particles | Small Particles | Particle outside/ inside | Particle outside/ inside | | 0.05C Load | 1C Load | | Maintenance Ratio |
| | - | - | % | % | - | - | g/cm3 | mAh/g | mAh/g | Wh/cm3 | % |
| Example 1 | 3.7 | 3:7 | 13 | 13 | 7.2 | 7.1 | 2.78 | 193 | 173 | 1.27 | 89.6 |
| Example 2 | 3.2 | 3:7 | 13 | 12 | 4.3 | 3.2 | 2.78 | 196 | 176 | 1.29 | 89.8 |
| Example 3 | 3.2 | 3:7 | 12 | 12 | 9.5 | 8.8 | 2.77 | 188 | 168 | 1.20 | 89.4 |
| Example 4 | 4.8 | 2:8 | 11 | 13 | 8.1 | 7.1 | 2.96 | 192 | 170 | 1.31 | 88.5 |
| Example 5 | 2.3 | 4:6 | 16 | 13 | 6.8 | 7.1 | 2.71 | 195 | 175 | 1.26 | 89.7 |
| Example 6 | 2.2 | 3:7 | 13 | 12 | 7.2 | 8.2 | 2.74 | 192 | 172 | 1.21 | 89.6 |
| Example 7 | 5.3 | 3:7 | 15 | 16 | 6.8 | 2.7 | 2.69 | 196 | 176 | 1.25 | 89.8 |
| Example 8 | 3.6 | 3:7 | 11 | 12 | 2.6 | 2.2 | 2.80 | 189 | 169 | 1.22 | 89.4 |
| Example 9 | 3.0 | 3:7 | 12 | 13 | 6.9 | 7.0 | 2.79 | 192 | 172 | 1.23 | 89.6 |
| Example 10 | 3.7 | 3:7 | 14 | 14 | 6.8 | 6.8 | 2.76 | 199 | 178 | 1.27 | 89.4 |
| | | | | | | | | | | | |
| Comp. 1 | 3.2 | 3:7 | 13 | 13 | 1.3 | 1.2 | 2.79 | 175 | 153 | 1.09 | 87.4 |
| Comp. 2 | 2.3 | 3:7 | 12 | 13 | 7.8 | 7.4 | 2.84 | 149 | 129 | 0.88 | 86.6 |
| Comp. 3 | 1.5 | 6:4 | 12 | 13 | 6.8 | 6.9 | 2.54 | 189 | 169 | 1.07 | 89.4 |
| Comp. 4 | 3.3 | 3:7 | 33 | 31 | 7.2 | 7.1 | 2.58 | 187 | 167 | 1.08 | 89.3 |
| Comp. 5 | 3.7 | 7:3 | 13 | 13 | 7.2 | 7.1 | 2.59 | 185 | 163 | 1.03 | 88.1 |
| Comp. 6 | 3.7 | 3:7 | 13 | 13 | - | - | 2.78 | 181 | 160 | 1.09 | 88.4 |

## Claims

1. A positive electrode active material for all-solid-state lithium ion batteries,

   wherein the positive electrode active material has a compositional formula represented by: $Li_aNi_bCo_cMn_dAl_eO_2$ with $1.00 \leq a \leq 1.02$; $0.8 \leq b \leq 0.9$; $0 < c \leq 0.2$; $0 < d \leq 0.2$; $b + c + d = 1$; and $0.02 \leq e \leq 0.15$;
   wherein the positive electrode active material has a ratio $C_s/C_c$ of from 2 to 10 in which $C_c$ is a concentration of Al at a central portion of a particle, and $C_s$ is a concentration of Al at a position of a depth of 10 nm from a surface of the particle in a cross section of the particle;
   wherein the positive electrode active material has a porosity in the particle of less than 30%; and
   wherein the positive electrode active material comprises a mixture of a positive electrode active material (1) having an average particle size (D50) of from 6 to 15 $\mu$m and a positive electrode active material (2) having an average particle size (D50) of from 1 to 5 $\mu$m.

2. The positive electrode active material for all-solid-state lithium ion batteries according to claim 1, wherein the positive electrode active material has a mass ratio of the positive electrode active material (1): the positive electrode active material (2) is from 5:5 to 2:8.

3. The positive electrode active material for all-solid-state lithium ion batteries according to claim 1 or 2, wherein the positive electrode active material has a ratio of the average particle size (D50) of the positive electrode active material (1) to the average particle size (D50) of the positive electrode active material (2) of from 2 to 6.

4. A positive electrode for all-solid-state lithium ion batteries, wherein the positive electrode comprises the positive electrode active material for all-solid-state lithium ion batteries according to any one of claims 1 to 3.

5. An all-solid-state lithium ion battery, wherein the all-solid-state lithium ion battery comprises the positive electrode for all-solid-state lithium ion batteries according to claim 4.

6. A method for producing the positive electrode active material for all-solid-state lithium ion batteries according to any one of claims 1 to 3, wherein the method comprises the steps of:

   dispersing $Al_2O_3$ in pure water to prepare an additive slurry;
   adding the additive slurry to a medium comprising nickel cobalt manganese hydroxide in pure water, stirring and dispersing the resulting mixture to provide a surface-treated slurry;

drying the surface-treated slurry to provide a surface-treated precursor; and
adding a lithium source to the surface-treated precursor and firing the resulting mixture at a temperature of from 650 to 800 °C.

7. The method for producing the positive electrode active material for all-solid-state lithium ion batteries according to claim 6, wherein an average particle size D50 of $Al_2O_3$ as a powder is from 0.05 to 0.7 $\mu$m on a volume basis.

## INTERNATIONAL SEARCH REPORT

International application No.

PCT/JP2020/037480

### A. CLASSIFICATION OF SUBJECT MATTER

Int. Cl. H01M4/525(2010.01)i, C01G53/00(2006.01)i, H01M4/36(2006.01)i,
H01M4/505(2010.01)i, H01M10/052(2010.01)i, H01M10/0562(2010.01)i
FI: H01M4/525, H01M4/505, H01M4/36 D, H01M10/0562, H01M10/052, C01G53/00 A

According to International Patent Classification (IPC) or to both national classification and IPC

### B. FIELDS SEARCHED

Minimum documentation searched (classification system followed by classification symbols)

Int. Cl. H01M4/525, C01G53/00, H01M4/36, H01M4/505, H01M10/052,
H01M10/0562

Documentation searched other than minimum documentation to the extent that such documents are included in the fields searched

Published examined utility model applications of Japan      1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 5395258 B2 (INDEPENDENT ADMINISTRATIVE INSTITUTION NATIONAL INSTITUTE FOR MATERIALS SCIENCE) 22 January 2014, claims 1-2, fig. 4 | 1-7 |
| A | JP 2019-509605 A (UMICORE) 04 April 2019, claims 1, 3 | 1-7 |
| A | JP 2016-122626 A (JX NIPPON MINING & METALS CORP.) 07 July 2016, claims 1, 4, examples 2-6 | 1-7 |
| A | WO 2015/198521 A1 (SONY CORP.) 30 December 2015, claim 1, paragraph [0021] | 1-7 |

☒ Further documents are listed in the continuation of Box C.     ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02.12.2020 | 15.12.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

International application No.

PCT/JP2020/037480

C (Continuation). DOCUMENTS CONSIDERED TO BE RELEVANT

| Category* | Citation of document, with indication, where appropriate, of the relevant passages | Relevant to claim No. |
|---|---|---|
| A | JP 2016-225300 A (JX NIPPON MINING & METALS CORP.) 28 December 2016, claims 1, 7, paragraphs [0025], [0026] | 1-7 |

Form PCT/ISA/210 (continuation of second sheet) (January 2015)

**INTERNATIONAL SEARCH REPORT**
Information on patent family members

| | International application No. |
|---|---|
| | PCT/JP2020/037480 |

| Patent Documents referred to in the Report | Publication Date | Patent Family | Publication Date |
|---|---|---|---|
| JP 5395258 B2 | 22.01.2014 | US 2013/0065135 A1 claims 1-2, fig. 4 WO 2011/125499 A1 EP 2555308 A1 CN 102823050 A KR 10-2012-0132533 A | |
| JP 2019-509605 A | 04.04.2019 | WO 2017/168274 A1 claims 1, 3 EP 3437148 A1 TW 201739095 A KR 10-2018-0122736 A CN 109075327 A | |
| JP 2016-122626 A | 07.07.2016 | (Family: none) | |
| WO 2015/198521 A1 | 30.12.2015 | US 2017/0149049 A1 claim 1, paragraph [0029] KR 10-2017-0022990 A CN 106663790 A | |
| JP 2016-225300 A | 28.12.2016 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5395258 B